# EUROPEAN PATENT SPECIFICATION

(11) **EP 3 589 491 B1**
(45) Date of publication and mention of the grant of the patent: **06.11.2024**
(21) Application number: 18710635.6
(22) Date of filing: 27.02.2018
(51) Int. Cl.: B33Y 10/00, B33Y 30/00, B33Y 50/02, B29C 64/393, B29C 64/282

(54) **THREE DIMENSIONAL PRINTING SYSTEM WITH OVERLAPPING LIGHT ENGINES**
DREIDIMENSIONALES DRUCKSYSTEM MIT ÜBERLAPPENDEN LICHTMASCHINEN
SYSTÈME D'IMPRESSION EN TROIS DIMENSIONS AVEC GÉNÉRATEURS DE LUMIÈRE SE CHEVAUCHANT

(30) Priority: 28.02.2017 US 201762464743 P
(43) Date of publication of application: 08.01.2020
(73) Proprietor: 3D Systems, Inc., Rock Hill, SC 29730 (US)
(72) Inventor: COOPER, Guthrie, Mill Spring, NC 28756 (US)
(74) Representative: dompatent von Kreisler Selting Werner - Partnerschaft von Patent- und Rechtsanwälten mbB
(86) International application number: PCT/US2018/019843
(87) International publication number: WO 2018/160525

(56) References cited:
- US-A1- 2016 046 075
- US-B1- 7 292 207
- US-B2- 9 415 443

## Description

### Cross Reference to Related Applications

This non-provisional patent application claims priority to U.S. Provisional Application Serial Number 62/464,743, Entitled "Three Dimensional Printing Systems with Overlapping Light Engines" by Guthrie Cooper, filed on February 28, 2017.

### Field of the Invention

The present disclosure concerns a system for the digital fabrication of three dimensional articles of manufacture through the solidification of liquid photon-curable (photocure) resins using plural light engines. More particularly, the present disclosure concerns a system combining plural light engines that minimizes artifacts in a transition zone between the light engines.

### Background

Three dimensional printers are in widespread use. Examples of three dimensional printer technologies includes stereolithography, selective laser sintering, and fused deposition modeling to name a few. Stereolithography-based printers utilize a controllable light engine to selectively harden or solidify a liquid photocure resin in a layerwise manner until a three dimensional article of manufacture is formed. In some embodiments and according to the invention the light engine includes a light source that illuminates a spatial light modulator.

Document US2016/0046075 A1 discloses a method of forming a three-dimensional object which includes: providing a carrier and an optically transparent member having a build surface, the carrier and the build surface defining a build region therebetween; filling the build region with a polymerizable liquid, irradiating the build region with light through the optically transparent member to form a solid polymer from the polymerizable liquid, and advancing said carrier away from said build surface to form said three-dimensional object from said solid polymer. The irradiating step includes projecting focused light at the build region, and the advancing step is carried out at a rate that is dependent on an average light intensity of the focused light.

The spatial light modulator in combination with the light source illuminates a "build plane" within the photocure resin to selectively cure the resin. The build plane is divided into pixel elements that correspond to pixel elements of the spatial light modulator. A typical spatial light modulator has one million or more pixel elements. This may provide a high resolution for a relatively small article of manufacture. With larger articles of manufacture, the use of a single spatial light modulator causes critical dimensions to scale with size.

One way to provide larger sizes and smaller critical dimensions is to combine light engines to define the build plane. This has challenges, however. A "lateral seam" region in which one light engine ends and another begins will be utilized for fabricating important portions of a three dimensional article of manufacture. This can be problematic since light engines tend to have edge artifacts and defects that can adversely affect quality in the lateral seam region. There is a need to combine light engines while suppressing the effects of these artifacts and defects.

### Brief Description of the Figures

FIG. 1 is a schematic block diagram of an exemplary three dimensional printing system.
FIG. 2 is a schematic diagram of two build fields that overlap to form a composite build plane.
FIG. 3 is a schematic diagram depicting a portion of an overlap zone between two build fields.
FIG. 4 is an electrical block diagram of an exemplary light engine.
FIG. 5 is a flowchart depicting an exemplary method of operating a three dimensional printing system 2 having a plurality of light engines.
FIG. 6A depicts a first embodiment of transparency maps for two overlapping light engines.
FIG. 6B depicts a second embodiment of transparency maps for two overlapping light engines.
FIG. 7 is a schematic diagram of four build fields that overlap to form a composite build plane.
FIG. 8 is a schematic diagram of a four field overlap zone.
FIG. 9 is a flow chart depicting a startup procedure for a three dimensional printing system.

### Summary

In a first aspect of the disclosure and according to claim 1, a three dimensional printing system is configured to form a three dimensional article of manufacture through a layer-by-layer process. Layers are formed by selectively adding photocure resin onto a lower face of the three dimensional article of manufacture. Layers are formed by solidifying resin proximate to and on a "composite build plane" which is a two dimensional lateral area that is addressable by the three dimensional printing system. The three dimensional printing system includes a vessel, a plurality of light engines, and a controller. The vessel is for containing photocure resin. The plurality of light engines include at least a first light engine and a second light engine. The first light engine includes a first light modulator defining a first rectangular array of pixel elements that define a first build field and the second light engine includes a second light modulator defining a second rectangular array of pixel elements that define a second build field. The first build field and the second build field overlap along an overlap zone. The first light engine is configured to: (a) receive a first incoming slice energy data array corresponding to the first build field; (b) process the first incoming slice energy data array to provide a first scaled and corrected data array corresponding to the first rectangular array of pixel elements of the first light engine, the processing includes applying a first transparency mask to the first pixel elements within the overlap zone, the first transparency mask defines a transition zone between two extended threshold zones, the extended threshold zones include a first extended threshold zone that is proximate to an edge of the first build field, the first transparency mask has first transparency values that are below ten percent in the extended threshold region; and (c) deliver optical energy to the first build field based upon the first scaled and corrected data array to selectively cure the resin.

In one implementation the three dimensional printing system further includes a movement mechanism for translating the three dimensional article of manufacture in a vertical direction. The controller is electrically or wirelessly coupled to the plurality of light engines and to the movement mechanism. The three dimensional printing system includes a processor and an information storage device. The information storage device stores instructions, that when executed by the processor, control the plurality of light engines, the movement mechanism, and other devices within the three dimensional printing system. The processor and the information storage device can be located within the controller or distributed between the controller and the light engines. The processor and the information storage device can be integrated into one integrated circuit or can be distributed among multiple integrated circuits that can be co-located and/or distributed within the three dimensional printing system.

In another implementation the transparency threshold is less than six percent. In another embodiment the transparency threshold is less than four percent. In yet another embodiment the transparency threshold is less than or equal to two percent.

In yet another implementation the overlap zone is at least about 20 pixels wide in which the width defines a degree of overlap between build fields. In another embodiment the overlap zone is at least about 50 pixels wide. In yet another embodiment the overlap zone is at least about 100 pixels wide. In a further embodiment the overlap zone is 100 to 160 pixels wide. In a yet further embodiment the overlap zone is 110 to 150 pixels wide. In another embodiment the overlap zone is 120 to 140 pixels wide.

In a further implementation the extended threshold zone is at least 5 pixels wide. In another embodiment the extended threshold zone is at least 10 pixels wide. In yet another embodiment the extended threshold region is at least 15 pixels wide. A further embodiment the extended threshold region is at least 19 pixels wide.

In a yet further implementation a magnitude of an average gradient of the transparency in the transition zone is at least twice a magnitude of an average gradient of the transparency in the first extended threshold zone. The gradient in either the transition zone or the extended threshold zone is generally directed along a short axis of the overlap zone.

In another implementation the second light engine is configured to: (a) receive a second incoming slice energy data array corresponding to the second build field; (b) process the second incoming slice energy data array to provide a second scaled and corrected data array corresponding to the second rectangular array of pixel elements of the second light engine, the processing includes applying a second transparency mask to the second pixel elements within the overlap zone, the second transparency mask defines a second transition zone between two extended threshold zones, the extended threshold zones have include a second extended threshold zone that is proximate to an edge of the second build field, the second transparency mask has second transparency values that are below ten percent in the second extended threshold region; and (c) deliver optical energy to the second build field based upon the second scaled and corrected data array to selectively cure the resin. In one embodiment a sum of the first transparency values and the second transparency values is substantially equal to 100 percent in the overlap zone. In another embodiment the plurality of light engines includes a third light engine and a fourth light engine, the third light engine defining a third build field and the fourth light engine defining a fourth build field, the first, second, third, and fourth build fields overlap to define a four field overlap zone and wherein the first transparency mask further defines a four sided extended threshold zone which surrounds a transition zone, the first transparency values are below the threshold in the four sided extended threshold zone.

According to claim 1 the first light engine is further configured to format the first scaled and corrected data array to define an image frame and to deliver the image frame to a digital mirror device. Formatting the first scaled and corrected data array includes converting a pixel element energy value to a binary number that represents a sequence of bit planes.

In a second aspect of the disclosure, a three dimensional printing system is configured to form a three dimensional article of manufacture through a layer-by-layer process. Layers are formed by selectively adding photocure resin onto a lower face of the three dimensional article of manufacture. Layers are formed by solidifying resin proximate to and on a "composite build plane" which is a two dimensional lateral area that is addressable by the three dimensional printing system. The three dimensional printing system includes a vessel, a plurality of light engines, and a controller. The vessel is for containing photocure resin. The plurality of light engines define a corresponding plurality of build fields. The plurality of build fields collectively define a composite build plane. The plurality of build planes define one or more overlap zones, each overlap zone defined along lateral X and Y axes. The plurality of light engines are collectively configured to: (a) receive a plurality of incoming slice energy data arrays corresponding to the plurality of build fields; (b) process the plurality of incoming slice energy data arrays to provide a corresponding plurality of scaled and corrected data arrays, the processing includes applying a plurality of transparency masks to the one or more overlap zones, the plurality of transparency masks define transparency values for the light engines that vary along at least one lateral direction, the plurality of transparency masks define extended threshold zones that border transition zones, the transparency values within the extended threshold zones are less than six percent for light engines near their lateral limits; and (c) deliver optical energy to the composite build plane based upon the scaled and corrected data array to selectively cure the resin.

In one implementation the one or more overlap zones include a two field overlap zone over which two of the build fields overlap. The two field overlap zone has a major axis defined along axis X. A transparency value T(Y) for a given light engine within the two field overlap zone has a gradient GRADT(Y) along the axis Y. The two field overlap zone includes two extended threshold zones that are proximate to the edges of two build fields with a transition zone between them. In one embodiment a magnitude of GRADT(Y) within the transition zone of the two field overlap zone is at least twice a magnitude of GRADT(Y) in the extended threshold zone of the two field overlap zone. In another embodiment T(Y) is less than four percent in the extended threshold zone for one of the light engines. In yet another embodiment T(Y) is less than two percent in the extended threshold zone for one of the light engines.

In another implementation the one or more overlap zones includes a four field overlap zone over which four different build fields overlap. The four field overlap zone includes a four sided extended threshold zone that surrounds a transition zone. In one embodiment a transparency value T(X, Y) within the four field overlap zone has a gradient GRADT(X, Y) that varies in lateral axes X and Y. In another embodiment the four field overlap zone has a substantially square shape. The GRADT(X,Y) in the transition zone can have a magnitude that is at least twice the magnitude of GRADT(X,Y) in the extended threshold zone.

### Detailed Description of the Preferred Embodiments

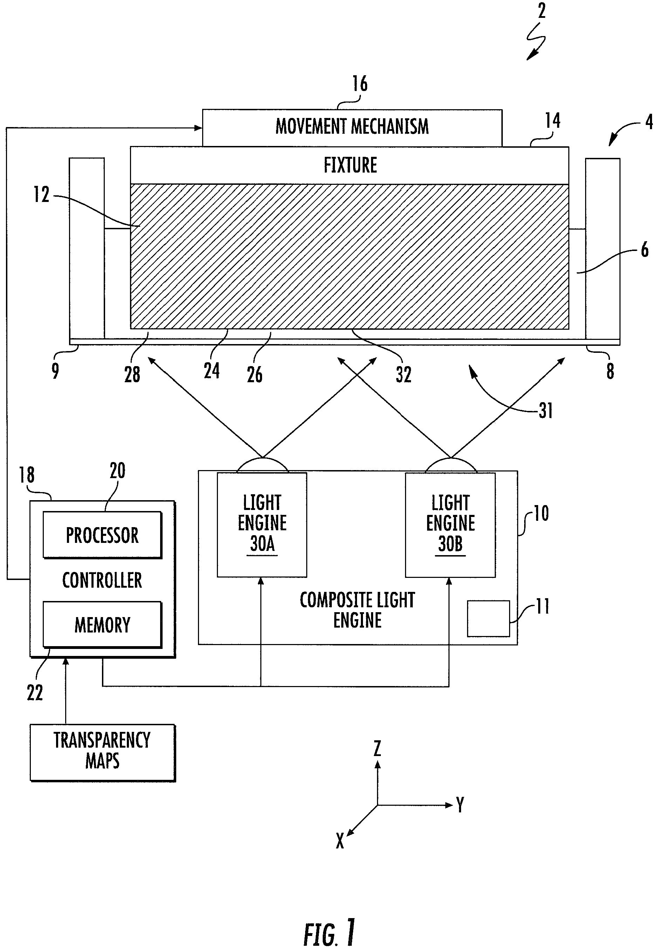

FIG. 1 is a schematic block diagram of an exemplary three dimensional printing system 2. In describing the following figures, mutually perpendicular axes X, Y and Z will be used. Axes X and Y are lateral axes. In some embodiments X and Y are also horizontal axes. Axis Z is a central axis. In some embodiments Z is a vertical axis. In some embodiments the direction +Z is generally upward and the direction -Z is generally downward.

Three dimensional printing system 2 includes a vessel 4 containing photocurable resin 6. Vessel 4 includes a transparent sheet 8 that defines at least a portion of a lower surface 9 of vessel 4. A composite light engine 10 is disposed to project light up through the transparent sheet 8 to solidify the photocure resin 6 and to thereby form the three dimensional article of manufacture 12. The three dimensional article of manufacture 12 is attached to a fixture 14. A movement mechanism 16 is coupled to fixture 14 for translating the fixture 14 along the vertical axis Z.

A controller 18 is electrically or wirelessly coupled to the composite light engine 10 and the movement mechanism 16. Controller 18 includes a processor 20 coupled to an information storage device 22. The information storage device includes a non-transient or non-volatile storage device (not shown) that stores instructions that, when executed by the processor 20, operate the movement mechanism 16 and/or the composite light engine 10. Controller 18 can be contained in a single IC (integrated circuit) or multiple ICs. Controller 18 can be at one location or distributed among multiple locations in three dimensional printing system 2. Processor 20 controls the composite light engine 10 and the movement mechanism 16.

The three dimensional article of manufacture 12 has a lower face 24 that faces the transparent sheet 8. Between the lower face 24 and the transparent sheet 8 is a thin layer of photocure resin 26. As composite light engine 10 applies light energy through the transparent sheet 8 it polymerizes resin proximate to a "composite build plane" 28 which can be coincident or proximate to the lower face 24.

The composite light engine 10 is formed from two or more individual light engines 30. FIG. 1 depicts a composite light engine that is formed by the combination of two light engines 30A and 30B. The arrows shown illustrate that each light engine 30 illuminates a different portion of the build plane 28. A portion of build plane 28 that is illuminated by one light engine 30 will be referred to as a "build field" 31 for the light engine 30. According to the illustration, the build fields 31 for light engines 30A and 30B overlap over an "overlap zone" 32.

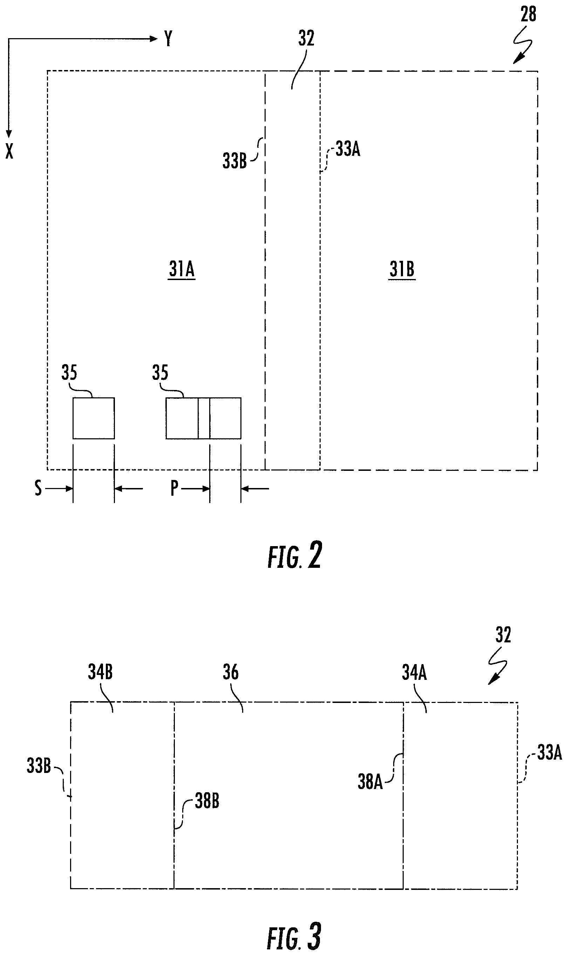

In an exemplary embodiment the light engines 30 are positioned in close enough proximity whereby they are parallel to the same image plane. This allows pixel elements 35 (see FIG. 2) generated by the two light engines 30 to have the same optimal lateral pitch P and lateral dimension S. In the illustrated embodiment of FIG. 2, the pixel lateral dimension S is greater than the pitch P whereby pixel elements 35 overlap along the lateral dimensions.

The composite light engine 10 also includes a temperature control module 11. The temperature control module 11 provides an optimal temperature in an environment surrounding the light engines 30. The light engine 30 components and alignments are temperature sensitive and this is particularly important in the overlap zone 32. Without the temperature regulation, the pixel sizes, alignment, and may not be uniform. In one embodiment the temperature control module 11 includes a temperature sensor and a heater to maintain a moderately elevated temperature environment for the light engines 30.

In an alternative embodiment each of the light engines 30 have a separate temperature control module 11. The separate temperature control modules 11 can be utilized to assure a consistent and optimal temperature for the light engines 30.

In yet another embodiment the composite light engine 10 is located above the resin 6. In this embodiment the fixture 14 would be a platform that raises and lowers within the resin 6.

FIG. 2 depicts composite build plane 28 for the two light engines 30A and 30B. Light engine 30A defines build field 31A and light engine 30B defines build field 31B. Build fields 31A and 31B combine to define the composite build plane 28. An overlap zone 32 is also shown over which build fields 31A and 31B overlap. The overlap zone 32 has a first edge 33A that is defined by a lateral limit of light engine 30A. The overlap zone 32 has a second edge 33B that is defined by a lateral limit of light engine 30B. As depicted, the edges 33A and 33B extend along axis X which is the long axis of the overlap zone 32. Axis Y is perpendicular to the long axis of the overlap zone 32 and is a direction of overlap.

While composite build plane 28 and build fields 31A and 31B are shown as rectangular, in practice they may have distorted shapes. Defects introduced by imperfect optics of the light engines 30 may include various artifacts. Some of these are known as "barrel distortion" and "keystone effect" to name two examples. The edges 33A and 33B defined by light engines 30A and 30B may be wavy, distorted, or define an angle relative to the axis X.

Each of the build fields 31 define a rectangular array of pixel elements 35. A single pixel element 35 is depicted in FIG. 2 as very large for illustrative purposes but it is to be understood that each build field 31 would have more than a million pixel elements 35. The pixel elements are spaced along lateral axes X and Y by a pitch P. Each pixel element is substantially square shaped and has a lateral dimension of S. In a preferred embodiment, S > P so that pixel elements 35 overlap in the build fields 31 to some extent. This provides a smooth and uniform surface finish for three dimensional article of manufacture 12. Thus, the pixel elements 35 are slightly out of focus. In an exemplary embodiment the pitch P is in a range of 50 to 60 microns or about 56 microns. The lateral pixel dimension S is in a range of about 90 to 100 microns or about 94 microns. Other overlapping configurations are possible with different dimensions. Also, rectangular pixels having different lengths and widths can be used. This overlapping configuration between pixel elements is beneficial for a smooth transition in the overlap zone 32.

FIG. 3 depicts a close up view of a portion of the overlap zone 32 bounded by edges 33A and 33B. The overlap zone 32 is further divided into two extended threshold zones 34A and 34B and a transition zone 36. The extended threshold zones 34 are defined by a worst case variations in Y of the actual edges defined by light modulators 30. There is an inside boundary 38 of the extended threshold zone 34. Between boundaries 33 and 38 is the extended threshold region width which contains all edge-related irregularities, artifacts, and variations produced by light engines 30. The transition zone 36 is a zone over which the light engines 30 are ramped up and down to avoid any apparent seams in the overlap zone 32.

Within the extended threshold zone 34A, the build field 31A is near the lateral limit of light engine 30A. Within the extended threshold zone 34B, the build field 31B is near the lateral limit of light engine 30B.

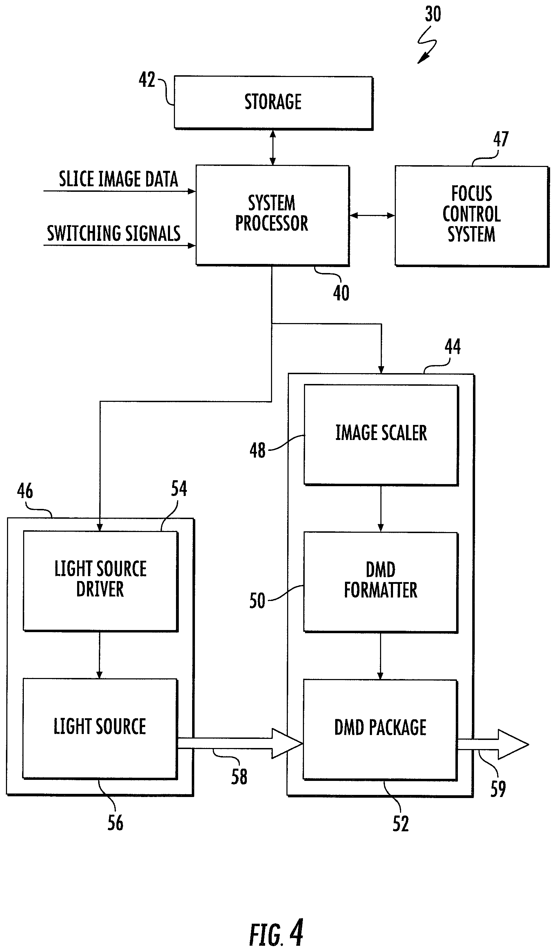

FIG. 4 is an electrical block diagram of an exemplary light engine 30. Light engine 30 includes system processor 40 coupled to information storage device 42, light source module 46, and digital mirror device module 44. The digital mirror device module 44 includes image scaler 48, digital mirror device formatter 50, and digital mirror device 52. The light source module 46 includes light source driver 54 and light source 56.

System processor 40 orchestrates operation of light engine 30. System processor 40 is configured to receive an incoming slice energy data array that corresponds to a build field 31 that is illuminated by the light engine 30. The incoming slice energy data array defines a two dimensional array of energy values that define optical cure energy to be applied versus position in X and Y. The pitch of the energy values in X and Y may or may not correspond to the pixel array on the spatial light modulator 52. The system processor 40 transmits the incoming slice energy data array to the image scaler 48 of the digital mirror device module 44.

Information storage device 42 can include one or more memory devices that store incoming or processed data for the system processor 40. Such data can include the incoming slice energy data array.

Image scaler 48 processes the slice energy data array to provide one or more of correction, calibration, scaling, and transparency adjustment for the overlap zone 32. Correction includes de-warping, and corrections for distortions such as barrel distortion and the keystone effect. Calibration can include compensation for light source 56 output and variation in an optical path length from the light engine 30 to the build plane 28. Scaling can include remapping and frame rescaling. Remapping is the conversion of an incoming data array pitch to the pitch of a pixel array of the digital mirror device 52. Frame rescaling is the scaling of the energy values from a total energy per pixel to an energy per pixel for one frame. Frame rescaling is needed if the frame period is different than a cure time. The transparency adjustment concerns energy modulation to provide correct energy values in the overlap zone 32. In alternative embodiments one or more portions of correction, calibration, scaling, and transparency adjustment can be performed by controller 18 or in digital mirror device formatter 50. Image scaler 48 outputs a scaled energy data array to the digital mirror device formatter 50.

Digital mirror device formatter 50 converts the scaled energy data array to an image frame that is directly compatible with the digital mirror device 52. The scaled energy data array has a scaled (for the frame period) energy value for each pixel. The digital mirror device formatter 50 converts each energy value into a binary number corresponding to a sequence of bit planes having a varying width or duration. The resultant data digital mirror device formatter 50 then sends one or more of the image frames to the digital mirror device 52.

The system processor 40 is configured to receive switching signals from controller 18 and to pass the switching signals to the light source driver 54 of the light source module 46. The light source driver 54 provides power to the light source 56. In an exemplary embodiment light source 56 is a light emitting diode (LED) that emits ultraviolet (UV) light. The switching signals include an "on" signal that activates (turns on) the light source 56 and an "off" signal that deactivates (turns off) the light source 56. In other embodiments the light source 56 includes one or more of a laser and a blue light emitter.

In an exemplary embodiment the light source 56 emits an optimal wavelength peak that is one or more of 340 nanometers (nm), 355 nm, about 365 nm, and/or 405 nm. These optimal wavelengths are readily absorbed by photoinitiators used in photocurable resin 6 thereby reducing an amount of photoinitiator required. This in turn improves polymerization efficiencies and thereby reduces blending discontinuities in the overlap zone 32.

Also depicted in FIG. 4 is the transmission of light (thicker arrows 58 and 59) through and from light engine 30. Element 58 depicts the "raw" or unprocessed light emitted by the light source 56. Element 59 depicts the pixelated light that is reflected by the digital mirror device 52 and to optics that in turn deliver the pixelated light to the build plane 28.

Light engine 30 also includes an focus control system 47 for optimally focusing the pixel elements 35 on the build field 31. In one embodiment the focus control system 47 includes a stepper motor for adjusting optics in light engine 30. In a particular embodiment the focus control system 47 includes a sensor that senses the individual pixel element 35 dimension S.

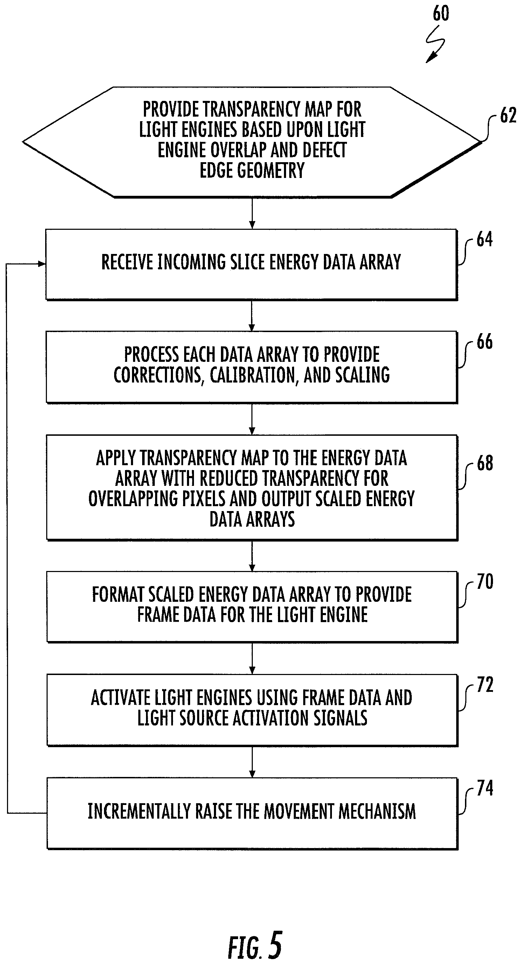

FIG. 5 is a flowchart depicting an exemplary method 60 of operating a three dimensional printing system 2 having a plurality of light engines 30 that are assembled into a composite light engine 10. Each light engine 30 illuminates a separate build field 31. The build fields 31 partially overlap laterally in order to define the composite build field 28. The lateral overlap between build fields 31 is an "overlap zone."

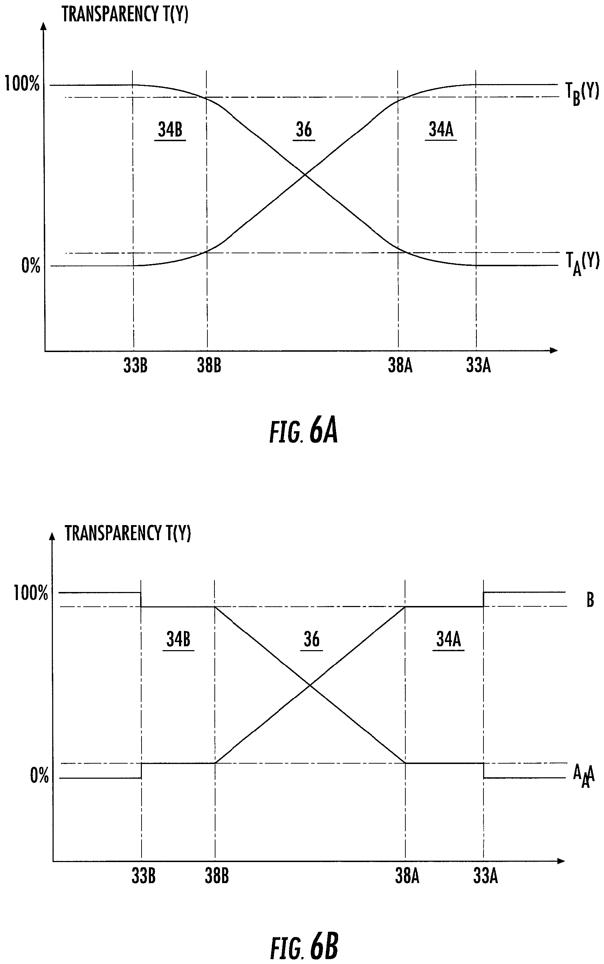

The method starts with beginning step 62 in which each light engine includes a transparency map. Exemplary transparency maps for the overlap of two light engines 30 are illustrated in FIGS. 6A and 6B. The transparency map for a given light engine 30 can be stored in the light engine 30 or it can be stored in memory 22 of controller 18. Steps 64-74 will be described for one light engine 30 but it is to be understanding that this process occurs in parallel for all of the light engines 30 that are being utilized to form an article of manufacture.

According to step 64, the light engine 30 receives an incoming slice energy data array. According to step 66, the light engine 30 processes the incoming slice energy data array to provide corrections, calibration, and scaling. According to step 68, the light engine 30 processes the data array to apply a transparency map that reduces the energy values within the overlap zone. According to step 70 the light engine 30 formats the scaled energy data to provide an image frame that is compatible with the light engine. According to step 72 the light engine 30 activates the digital mirror device 52 with the frame data. The light engine 30 also activates the light source 56. During step 72 a layer of resin 6 is selectively cured proximate to the build plane 28 and onto the lower face 24 of the three dimensional article of manufacture 12. According to step 74, the lower face is incrementally displaced upward. Steps 64-74 are repeated until the three dimensional article of manufacture 12 is fully formed.

FIG. 6A depicts a first embodiment of transparency maps for two overlapping light engines 30A and 30B. A transparency map plots transparency versus position along the Y axis which is approximately perpendicular to the long axis of the overlap zone 32. For a given pixel element, the transparency is the percentage of the energy value to be utilized. Without a transparency map, the energy applied to the overlap zone 32 would be up to 100% too high. Therefore the A and B maps are complementary - at a given Y value, the transparency of one is T(Y) and the other is 100%-T(Y).

The overlap zone 32 is the region between Y-values of 33B and 33A. The edge of the build field 31B for light engine 30B is represented by the vertical line 33B. At edge 33B, the transparency T_{B}(Y) for light engine 30B is 0 percent. In moving to the right, the value of T_{B}(Y) increases and reaches 100% at the edge 33A of light engine A. In moving between 33B to 33A, the sum T_{A}(Y) + T_{B}(Y) = 100%.

The zone between 33B and 38B is called the "extended threshold zone" 34B. The extended threshold zone 34B zone receives light proximate to the edge of light engine 30B. In this extended threshold zone 34B there is a high likelihood of edge-related artifacts or geometric edge defects for light modulator 30B. For some light engines 30, these defects or artifacts will substantially affect the cured thickness of a new resin layer. Therefore the transparency value T_{B} for the edge of light modulator 30B is reduced to below a threshold value. In that vicinity, the complementary light modulator 30A does not have the edge defects and artifacts, so the accuracy of the composite cure in that zone will be much higher. According to claim 1, the transparency T_{B} in the extended threshold zone 34B proximate to the edge of a light modulator 30B is reduced to 10% or less. In another embodiment it is reduced to 5% or less. In yet another embodiment it is reduced to 2% or less. In the illustrated embodiment of FIG. 6A the transparency T_{B} is reduced by reducing a slope of T_{B}(Y) versus Y in the extended threshold region 34B.

The zone between 38A and 33A is the extended threshold zone 34A. In extended threshold zone 34A the value of T_{A}(Y) is reduced to below ten percent value for the same reasons as was discussed for extended threshold region 34B.

Between 38B and 38A is a "transition zone" 36 which is provided to provide a transition between the two light engines 38A and 38B. The slope of the transparency curves can be close to linear in much of the the transition zone 36.

For T(Y) functions we can define the mathematical vector gradient of T(Y) as GRADT(Y). For the embodiment of FIGS. 2, 3, and 6A, the gradient is substantially directed along the Y axis. The magnitude of GRADT(Y) is therefore the same as the slope of T versus Y. In an exemplary embodiment, an average magnitude of GRADT(Y) in the transition zone 36 will be at least twice the average magnitude of GRADT(Y) in the extended threshold zones 34.

FIG. 6B depicts a second embodiment of transparency maps for light engines 30A and 30B. In the extended threshold zone 34B near the edge 33B of light engine 30B (between 33B and 38B on the graph), the transparency T_{B}(Y) for modulator B is at a low fixed level. The value T_{B}(Y) can be below 10%, below 5%, or below 2% depending upon how much it is desired to reduce the edge artifacts or defects of light engine 30B. The transition from outside of the overlap region to the extended threshold zone is a step transition rather than a curve for edges 33A and 33B. Thus, at edge 33B, the curve of T_{A}(Y) steps down by an amount by which the curve of T_{B}(Y) steps down. Likewise, at edge 33A, the curve of T_{A}(Y) steps down by an amount by which the curve of T_{B}(Y) steps down.

At the extended threshold zone 34A near the edge 33A of light engine 30A (between 38A and 33A on the graph), the transparency T_{A}(Y) for modulator B is at a low fixed level. Between the extended threshold zones 34A and 34B is the transition zone 36 (between 38B and 38A on the graph). In the transition zone, the plots of the transparency T are depicted as linearly varying.

Other possibilities can be considered. The extended threshold zones can be "stair stepped" upwardly from the edges 32 of the light modulators 30. Smaller transparency values T can apply to Y locations that have the higher probability of a defect or artifact for a given light modulator 30.

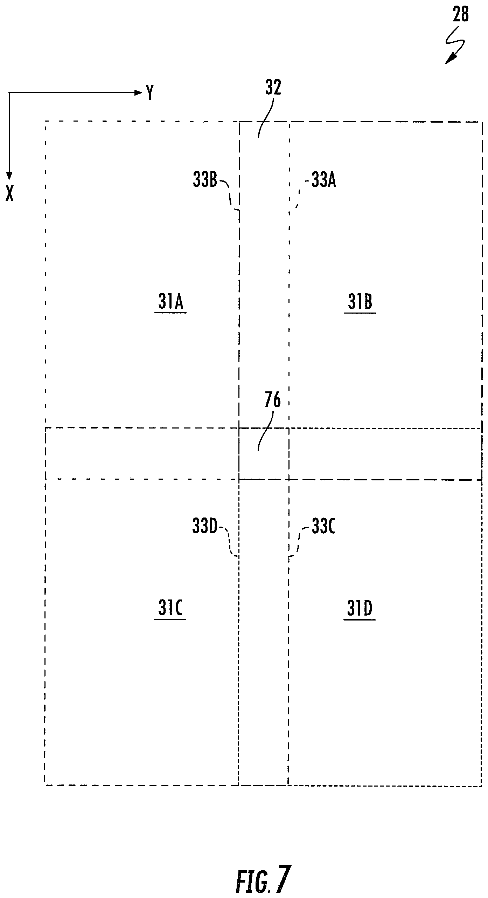

FIG. 7 depicts a composite build plane 28 for four light engines 30A, 30B, 30C, and 30D. Light engine 30A defines build field 31A, light engine 30B defines build field 31B, light engine 30C defines build field 31C, and light engine 30D defines build field 31D. As before there are overlap zones 32 between pairs of build fields 31 for respective pairs of light engines 30. For the overlap of a pair of light engines, similar transparency maps as presented in FIGS. 6A and 6B can apply.

However, with this arrangement there is a also a four field overlap zone 76 within which the build fields 31 for all four light engines 30 overlap. In the four field overlap zone 76 the transparency T(X, Y) for a given light engine 30 varies in along both lateral axis X and Y.

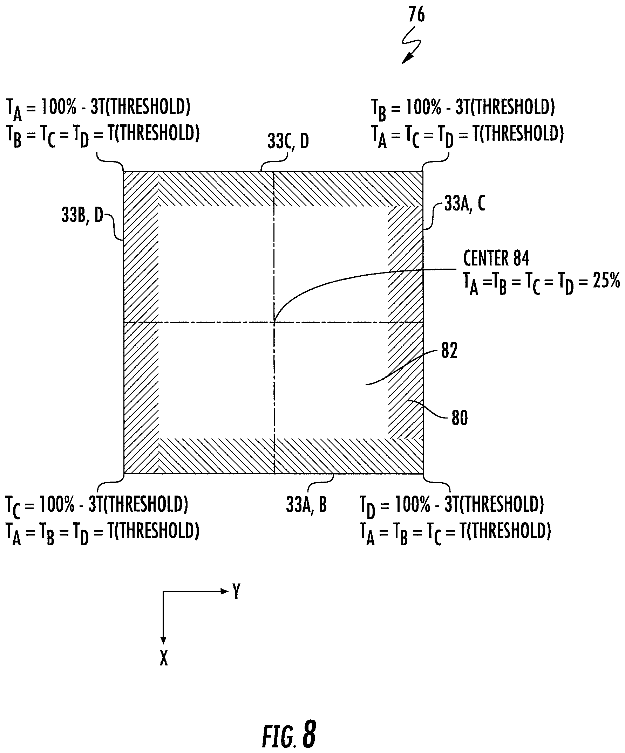

FIG. 8 is a more detailed view of an exemplary four field overlap zone 76. The left edge of four field overlap zone 76 includes the edges 33B, 33D of light engines 30B and 30D. The other four edges of the four way overlap zone 76 indicate the respective edges 33 of the light engines 30. The four field overlap zone 76 includes a four sided extended threshold zone 80 which surrounds a substantially square transition zone 82. Edge defects and artifacts from the four light modulators 30 will generally be contained in the four sided extended threshold zone 80.

For a given light engine 30, the transparency along its edge would be reduced to at or below T(THRESHOLD). In the transition zone 82 the contributions of the light engines 30 would each vary approximately linearly away from their edges with the requirement being that for all locations, T_{A}(X, Y) + T_{B}(X, Y) + Tc(X, Y) + T_{B}(X, Y) = 100%. There are clearly many ways to do this, but the important aspect is to select a threshold transparency that is low enough such that the edge effects are acceptable.

This can be generalized to any number of overlapping light engines 30 to form a composite build plane 28. For larger numbers of light engines 30 there will be two field overlap zones 32 and four field overlap zones 76 within which transparency mask functions T(X, Y) are used to transition between light engines 30 and to reduce the effects of edge artifacts and defects.

For T(X, Y) functions we can define the mathematical vector gradient of T(X, Y) as GRADT(X, Y). For a four field overlap zone the gradient is directed generally toward or away from a center 84 of the four field overlap zone. In an exemplary embodiment, an average magnitude of GRADT(X, Y) in the transition zone 82 will be at least twice the average magnitude of GRADT(X, Y) in the extended threshold zone 80.

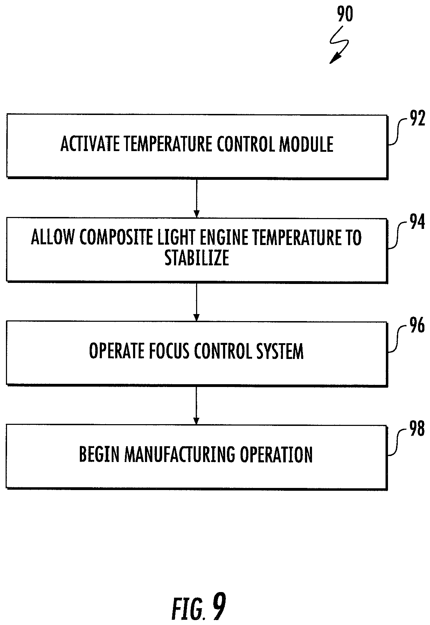

FIG. 9 is a flowchart depicting a startup procedure for the three dimensional printing system 2. This startup procedure assures that discontinuities and artifacts will be minimized in the overlap zone 32. The procedure starts with step 92 and the activation of the temperature control module 11. The temperature control module 11 senses the temperature in the environment containing the light engines 30 and increases the temperature to an optimal level for the alignment of optics and operation of components within the composite light engine 10.

According to step 94, a wait time provided to give time for the composite light engine 10 to achieve thermal equilibrium at the optimal temperature. Optical adjustments are suspended during this wait time so that such adjustments are better maintained.

According to step 96 the focus control system 47 is operated to provide an optimal focus of the pixel elements 35. In particular, the degree of focus of the pixel elements 35 for the different build fields is consistent across the composite build plane 28 so that the surface finish of the three dimensional article of manufacture 12 is consistent across the overlap zone 32.

According to step 98, a manufacturing operation begins. The method 60 of FIG. 5 includes steps that can be part of the manufacturing operation of step 98.

The specific embodiments and applications thereof described above are for illustrative purposes only and do not preclude modifications and variations encompassed by the scope of the following claims.

## Claims

1. A three-dimensional printing system (2) which forms a three dimensional article of manufacture through a layer-by-layer process with layers formed by selectively curing photocure resin (6) onto a face of a three dimensional article of manufacture comprising:
a vessel (4) for containing the photocure resin (6); and
a plurality of light engines (30) including at least a first light engine (30A) and a second light engine (30B), the first light engine includes a first light modulator defining a first rectangular array of pixel elements (35) that define a first build field (31A), the second light engine (30B) includes a second light modulator defining a second rectangular array of pixel elements (35) that define a second build field (31B),
the first build field (31A) and the second build field (31B) overlap along an overlap zone (32), the first light engine (30A) is configured to:
(a) receive a first incoming slice energy data array corresponding to the first build field (31A);
(b) process the first incoming slice energy data array to provide a first scaled and corrected data array corresponding to the first rectangular array of pixel elements (35)of the first light engine (30A), the processing includes applying a first transparency mask to the first pixel elements (35) within the overlap zone (32), the first transparency mask defines a transition zone between two extended threshold zones (34A, 34B), the extended threshold zones (34A, 34B) include a first extended threshold zone (34A) that is proximate to an the edge of the first build field (31A), the first transparency mask has first transparency values that are below ten percent in the extended threshold region; and
(c) deliver optical energy to the first build field (31A) based upon the first scaled and corrected data array to selectively cure the resin,
wherein the first light engine is further configured to format the first scaled and corrected data array to define image frames and to deliver the image frames to a digital mirror device and wherein the formatting the first scaled and corrected data array includes converting a pixel element energy value to a binary number that represents a sequence of bit planes.

2. The three-dimensional printing system (2) of claim 1 wherein the transparency threshold is less than six percent.

3. The three-dimensional printing system (2) of claim 1 wherein the transparency threshold is less than four percent.

4. The three-dimensional printing system (2) of claim 1 wherein the transparency threshold is less than two percent.

5. The three-dimensional printing system (2) of claim 1 wherein a magnitude of an average gradient of the transparency in the transition zone is at least twice a magnitude of an average gradient of the transparency in the first extended threshold zone (34A).

6. The three-dimensional printing system (2) of claim 1 wherein the second light engine is configured to:
(a) receive a second incoming slice energy data array corresponding to the second build field (31B);
(b) process the second incoming slice energy data array to provide a second scaled and corrected data array corresponding to the second rectangular array of pixel elements of the second light engine (30B), the processing includes applying a second transparency mask to the second pixel elements within the overlap zone (32), the second transparency mask defines a transition zone between two extended threshold zones (34A, 34B), the extended threshold zones (34A, 34B) include a second extended threshold zone (34B) that is proximate to an edge of the second build field (31B), the second transparency mask has second transparency values that are below ten percent in the second extended threshold region; and
(c) deliver optical energy to the second build field (31B) based upon the second scaled and corrected data array to selectively cure the resin.

7. The three-dimensional printing system (2) of claim 6 wherein a sum of the first transparency values and the second transparency values is substantially equal to 100 percent in the overlap zone (32).

8. The three-dimensional printing system (2) of claim 6 wherein the plurality of light engines (30) includes a third light engine and a fourth light engine, the third light engine defining a third build field and the fourth light engine defining a fourth build field, the first, second, third, and fourth build fields overlap to define a four field overlap zone and wherein the first transparency mask further defines a four sided extended threshold zone which surrounds a transition zone.

9. The three-dimensional printing system (2) of claim 8 wherein the first transparency mask has transparency values T(X, Y) within the four field overlap zone that vary along lateral axes X and Y according to a gradient GRADT(X, Y).

10. The three-dimensional printing system (2) of claim 9 wherein a magnitude of GRADT(X, Y) within the transition zone is at least twice that of a magnitude of GRADT(X, Y) within the extended threshold zone.

11. The three-dimensional printing system (2) of claim 1 wherein the overlap zone is at least 20 pixels in width.

12. The three-dimensional printing system (2) of claim 1 wherein the overlap zone is at least 50 pixels in width.

## Patentansprüche

1. 3D-Drucksystem (2), das durch ein schichtweises Verfahren ein dreidimensionales Erzeugnis bildet, wobei Schichten dadurch gebildet werden, dass lichthärtbares Harz (6) selektiv auf einer Fläche eines dreidimensionalen Erzeugnisses gehärtet wird, umfassend:
ein Gefäß (4) zur Aufnahme des lichthärtbaren Harzes (6); und
eine Vielzahl von Lichtgeneratoren (30), die wenigstens einen ersten Lichtgenerator (30A) und einen zweiten Lichtgenerator (30B) umfassen, wobei der erste Lichtgenerator einen ersten Lichtmodulator umfasst, der ein erstes rechteckiges Array von Pixelelementen (35) definiert, die ein erstes Baufeld (31A) definieren, wobei der zweite Lichtgenerator (30B) einen zweiten Lichtmodulator umfasst, der ein zweites rechteckiges Array von Pixelelementen (35) definiert, die ein zweites Baufeld (31B) definieren,
wobei das erste Baufeld (31A) und das zweite Baufeld (31B) entlang einer Überlappungszone (32) überlappen, wobei der erste Lichtgenerator (30A) so konfiguriert ist, dass er:
(a) ein erstes hereinkommendes Scheiben-Energie-Datenfeld, das dem ersten Baufeld (31A) entspricht, empfangen kann,
(b) das erste hereinkommende Scheiben-Energie-Datenfeld so verarbeiten kann, dass man ein erstes skaliertes und korrigiertes Datenfeld erhält, das dem ersten rechteckigen Array von Pixelelementen (35) des ersten Lichtgenerators (30A) entspricht, das Verarbeiten das Anwenden einer ersten Transparenzmaske auf die ersten Pixelelemente (35) innerhalb der Überlappungszone (32) umfasst, die erste Transparenzmaske eine Übergangszone zwischen zwei ausgedehnten Schwellenzonen (34A, 34B) definiert, die ausgedehnten Schwellenzonen (34A, 34B) eine erste ausgedehnte Schwellenzone (34A) umfassen, die sich proximal zu einem Rand des ersten Baufelds (31A) befindet, die erste Transparenzmaske erste Transparenzwerte aufweist, die im ausgedehnten Schwellenbereich unter zehn Prozent liegen; und
(c) auf der Basis des ersten skalierten und korrigierten Datenfelds optische Energie an das erste Baufeld (31A) abgeben kann, so dass das Harz selektiv gehärtet wird,
wobei der erste Lichtgenerator weiterhin so konfiguriert ist, dass er das erste skalierte und korrigierte Datenfeld so formatieren kann, dass es Einzelbilder definieren und die Einzelbilder an eine digitale Spiegelvorrichtung abgeben kann, und wobei das Formatieren des ersten skalierten und korrigierten Datenfelds das Umrechnen eines Pixelelementenergiewerts in eine Binärzahl umfasst, die für eine Abfolge von Bitplanes steht.

2. 3D-Drucksystem (2) gemäß Anspruch 1, wobei die Transparenzschwelle kleiner als sechs Prozent ist.

3. 3D-Drucksystem (2) gemäß Anspruch 1, wobei die Transparenzschwelle kleiner als vier Prozent ist.

4. 3D-Drucksystem (2) gemäß Anspruch 1, wobei die Transparenzschwelle kleiner als zwei Prozent ist.

5. 3D-Drucksystem (2) gemäß Anspruch 1, wobei die Größe eines mittleren Gradienten der Transparenz in der Übergangszone wenigstens zweimal so groß ist wie die Größe eines mittleren Gradienten der Transparenz in der ersten ausgedehnten Schwellenzone (34A).

6. 3D-Drucksystem (2) gemäß Anspruch 1, wobei der zweite Lichtgenerator so konfiguriert ist, dass er:
(a) ein zweites hereinkommendes Scheiben-Energie-Datenfeld, das dem zweiten Baufeld (31B) entspricht, empfangen kann;
(b) das zweite hereinkommende Scheiben-Energie-Datenfeld so verarbeiten kann, dass man ein zweites skaliertes und korrigiertes Datenfeld erhält, das dem zweiten rechteckigen Array von Pixelelementen des zweiten Lichtgenerators (30B) entspricht, das Verarbeiten das Anwenden einer zweiten Transparenzmaske auf die zweiten Pixelelemente innerhalb der Überlappungszone (32) umfasst, die zweite Transparenzmaske eine Übergangszone zwischen zwei ausgedehnten Schwellenzonen (34A, 34B) definiert, die ausgedehnten Schwellenzonen (34A, 34B) eine zweite ausgedehnte Schwellenzone (34B) umfassen, die sich proximal zu einem Rand des zweiten Baufelds (31B) befindet, die zweite Transparenzmaske zweite Transparenzwerte aufweist, die im zweiten ausgedehnten Schwellenbereich unter zehn Prozent liegen; und
(c) auf der Basis des zweiten skalierten und korrigierten Datenfelds optische Energie an das zweite Baufeld (31B) abgeben kann, so dass das Harz selektiv gehärtet wird.

7. 3D-Drucksystem (2) gemäß Anspruch 6, wobei die Summe der ersten Transparenzwerte und der zweiten Transparenzwerte in der Überlappungszone (32) im Wesentlichen gleich 100 Prozent beträgt.

8. 3D-Drucksystem (2) gemäß Anspruch 6, wobei die Vielzahl von Lichtgeneratoren (30) einen dritten Lichtgenerator und einen vierten Lichtgenerator umfasst, der dritte Lichtgenerator ein drittes Baufeld definiert und der vierte Lichtgenerator ein viertes Baufeld definiert, das erste, zweite, dritte und vierte Baufeld so überlappen, dass sie eine Vierfeldüberlappungszone definieren, und wobei die erste Transparenzmaske weiterhin eine vierseitige ausgedehnte Schwellenzone definiert, die eine Übergangszone umgibt.

9. 3D-Drucksystem (2) gemäß Anspruch 8, wobei die erste Transparenzmaske innerhalb der Vierfeldüberlappungszone Transparenzwerte T (X, Y) aufweist, die entlang seitlicher Achsen X und Y gemäß einem Gradienten GRADT (X, Y) variieren.

10. 3D-Drucksystem (2) gemäß Anspruch 9, wobei die Größe von GRADT (X, Y) innerhalb der Übergangszone wenigstens zweimal so groß ist wie die Größe von GRADT (X, Y) innerhalb der ausgedehnten Schwellenzone.

11. 3D-Drucksystem (2) gemäß Anspruch 1, wobei die Überlappungszone eine Breite von wenigstens 20 Pixel aufweist.

12. 3D-Drucksystem (2) gemäß Anspruch 1, wobei die Überlappungszone eine Breite von wenigstens 50 Pixel aufweist.

## Revendications

1. Système d'impression en 3D (2) qui forme un produit de fabrication tridimensionnel par un procédé couche par couche, avec les couches étant formées par durcissement sélectif d'une résine photodurcissable (6) sur une surface d'un produit de fabrication tridimensionnel, comprenant :
un récipient (4) pour contenir ladite résine photodurcissable (6), et
une pluralité de moteurs de lumière (30) incluant au moins un premier moteur de lumière (30A) et un deuxième moteur de lumière (30B), ledit premier moteur de lumière comprend un premier modulateur de lumière définissant un premier réseau rectangulaire d'éléments de pixel (35) qui définissent un premier champ de construction (31A), ledit deuxième moteur de lumière (30B) comprend un deuxième modulateur de lumière définissant un deuxième réseau rectangulaire d'éléments de pixel (35) qui définissent un deuxième champ de construction (31B),
ledit premier champ de construction (31A) et ledit deuxième champ de construction (31B) se chevauchent le long d'une zone de chevauchement (32), ledit premier moteur de lumière (30A) est configuré pour
(a) recevoir un premier champ de données d'énergie de tranche entrant correspondant au premier champ de construction (31A),
(b) traiter le premier champ de données d'énergie de tranche entrant pour procurer un premier champ de données mises à l'échelle et corrigées, correspondant au premier champ rectangulaire d'éléments de pixel (35) dudit premier moteur de lumière (30A), l'étape consistant à traiter comprend le fait d'appliquer un premier masque de transparence aux premiers éléments pixel (35) au sein de la zone de chevauchement (32), le premier masque de transparence définit une zone de transition entre deux zones de seuil étendues (34A, 34B), lesdites zones de seuil étendues (34A, 34B) comprennent une première zone de seuil étendue (34A) qui est proximale à un bord du premier champ de construction (31A), ledit premier masque de transparence possède de premières valeurs de transparence inférieures à dix pour cent dans la région de seuil étendue, et
(c) délivrer de l'énergie optique au premier champ de construction (31A), basée sur le premier champ de données mises à l'échelle et corrigées pour durcir sélectivement la résine,
dans lequel le premier moteur de lumière est configuré en outre pour formater ledit premier champ de données mises à l'échelle et corrigées pour définir des trames d'image et pour délivrer les trames d'image à un dispositif miroir digital, et dans lequel le fait de formater le premier champ de données mises à l'échelle et corrigées comprend le fait de convertir une valeur d'énergie d'élément pixel en nombre binaire qui représente une séquence de plans binaires.

2. Système d'impression en 3D (2) selon la revendication 1, dans lequel le seuil de transparence est inférieur à six pour cent.

3. Système d'impression en 3D (2) selon la revendication 1, dans lequel le seuil de transparence est inférieur à quatre pour cent.

4. Système d'impression en 3D (2) selon la revendication 1, dans lequel le seuil de transparence est inférieur à deux pour cent.

5. Système d'impression en 3D (2) selon la revendication 1, dans lequel la magnitude du gradient moyen de la transparence dans la zone de transition est au moins deux fois la magnitude du gradient moyen de la transparence dans la première zone de seuil étendue (34A).

6. Système d'impression en 3D (2) selon la revendication 1, dans lequel ledit deuxième moteur de lumière est configuré pour
(a) recevoir un deuxième champ de données d'énergie de tranche entrant correspondant au deuxième champ de construction (31B),
(b) traiter le deuxième champ de données d'énergie de tranche entrant pour procurer un deuxième champ de données mises à l'échelle et corrigées, correspondant au deuxième champ rectangulaire d'éléments de pixel dudit deuxième moteur de lumière (30B), l'étape consistant à traiter comprend le fait d'appliquer un deuxième masque de transparence aux deuxièmes éléments pixel au sein de la zone de chevauchement (32), le deuxième masque de transparence définit une zone de transition entre deux zones de seuil étendues (34A, 34B), lesdites zones de seuil étendues (34A, 34B) comprennent une deuxième zone de seuil étendue (34B) qui est proximale à un bord du deuxième champ de construction (31B), ledit deuxième masque de transparence possède de deuxièmes valeurs de transparence inférieures à dix pour cent dans la région de seuil étendue, et
(c) délivrer de l'énergie optique au deuxième champ de construction (31B), basée sur le deuxième champ de données mises à l'échelle et corrigées pour durcir sélectivement la résine.

7. Système d'impression en 3D (2) selon la revendication 6, dans lequel la somme des premières valeurs de transparence et des deuxièmes valeurs de transparence est sensiblement égale à 100 pour cent dans la zone de chevauchement (32).

8. Système d'impression en 3D (2) selon la revendication 6, dans lequel la pluralité des moteurs de lumière (30) comprennent un troisième moteur de lumière et un quatrième moteur de lumière, ledit troisième moteur de lumière définissant un troisième champ de construction, et ledit quatrième moteur de lumière définissant un quatrième champ de construction, lesdits premier, deuxième, troisième et quatrième champs de construction se chevauchent pour définir une zone de chevauchement à quatre champs, et dans lequel ledit premier masque de transparence définit en outre une zone de seuil étendue à quatre côtés qui entoure une zone de transition.

9. Système d'impression en 3D (2) selon la revendication 8, dans lequel ledit premier masque de transparence possède des valeurs de transparence T (X, Y) au sein de la zone de chevauchement à quatre champs qui varient le long d'axes latéraux X et Y selon un gradient GRADT (X, Y).

10. Système d'impression en 3D (2) selon la revendication 9, dans lequel la magnitude de GRADT (X, Y) au sein de la zone de transition est au moins deux fois la magnitude de GRADT (X, Y) au sein de la zone de seuil étendue.

11. Système d'impression en 3D (2) selon la revendication 1, dans lequel ladite zone de chevauchement a une largeur d'au moins 20 pixels.

12. Système d'impression en 3D (2) selon la revendication 1, dans lequel ladite zone de chevauchement a une largeur d'au moins 50 pixels.
